# EUROPEAN PATENT SPECIFICATION

(11) **EP 2 959 248 B1**
(45) Date of publication and mention of the grant of the patent: **02.12.2020**
(21) Application number: 14708516.1
(22) Date of filing: 25.02.2014
(51) Int. Cl.: F27B 3/20, F27B 3/22, F27B 3/26

(54) **AN END PORT REGENERATIVE FURNACE**
ENDPORT-REGENERATIV-OFEN
FOUR DE RÉGÉNÉRATION À ORIFICE DE SORTIE

(30) Priority: 25.02.2013 GB 201303283
(43) Date of publication of application: 30.12.2015
(73) Proprietor: Linde GmbH, 82049 Pullach (DE)
(72) Inventor: SIMPSON, Neil, Ayton Central Scotland TD14 5QX (GB); WILCOX, Richard, Rotherham South Yorkshire S66 1DX (GB)
(74) Representative: Gellner, Bernd
(86) International application number: PCT/EP2014/053660
(87) International publication number: WO 2014/128311

(56) References cited:
- EP-A1- 1 634 856
- EP-A1- 2 210 864
- EP-A1- 2 508 827
- US-A- 4 927 357
- US-A- 5 779 754
- US-A- 6 113 389
- US-A1- 2010 242 545

## Description

The present invention relates to a glass melting regenerative furnace to reduce the formation of NOx and increase glass melting capacity. Legislation and community concerns require the reduction of NOx levels. The use of oxygen to accomplish same is one option in reducing said levels.

One such furnace is disclosed in WO 2010/114714. This discloses a fuel burner, which is preferably arranged on the hotspot of the furnace or in its proximity and is preferably operated substoichiometrically i.e., fuel-rich, located downstream from a burner port operated to form a combustion flame. A further fuel burner is arranged further downstream, which is operated superstoichiometrically, i.e., oxygen-rich. In practice, the two fuel burners are preferably located on the opposing side walls of the furnace in front of the outlet port for liquid glass. Oil or gas can be used as the fuels. The use of the fuel-rich, substoichiometrically operated burner results in an expansion of the fuel-rich areas in the furnace, so that the formation of NOx is decreased because of a lack of oxygen and because of the produced CO. Further downstream and therefore in the direction of the exhaust gas side of the furnace, the second oxygen-rich and therefore superstoichiometrically operated fuel burner ensures thorough mixing of the exhaust gases with an oxygen-rich flame and therefore the most complete possible post-combustion of incompletely combusted fuel components. The two fuel burners, which are also referred to as "hotspot burners", are preferably arranged opposite one another in the third of the longitudinal walls of the furnace located further downstream, and are therefore located in the area of the U-shaped reversal of the combustion gas stream in the furnace. Alternating furnace operation is readily possible, in that the fuel burners are switched from substoichiometric to superstoichiometric operation (or vice versa).

This furnace has been found to provide significantly reduced NOx exhaust gas values.

A development of this idea is disclosed in EP 2 508 827. In this case, additional gas flow streams which may be pure oxygen are injected into the charging end of the furnace. This gas is introduced at high speed to provide good mixing with the combustion gas which reduces the flame temperature resulting in a further reduction of the NOx concentration.

According to a first aspect of the invention, there is provided a furnace as defined in claim 1.

The present invention effectively takes the opposite approach to that described in EP 2 508 827 in that the pure streams are injected at the opposite end of the combustion chamber. It transpires that the arrangement of EP 2 508 827 changes the hot spot location adversely necessitating the use of hot spot burners to give an acceptable temperature profile. This requires the use of more oxygen. Installing lances which inject pure fuel gas and pure oxygen into the hot spot area, results in a significant reduction in energy or corresponding increase in throughput. By injecting a pure gas stream at the hot spot there is improved control of heat to the bridgewall and its temperature. It is known that oxygen or at least a high partial pressure/concentration at the glass surface will generate a foam layer which insulates the glass and the heat transfer. Conversely a reducing zone will suppress the foam layer. In following the U flame the gas on the firing side will reduce the foam layer and then will combust through non visible flame with the pure oxygen over the raw batch materials where foaming is not an issue.

For optimum positioning, the first lance assembly and second lance assembly are each disposed on an opposing side wall of the housing. Alternatively, they may be disposed in a crown of the housing but nevertheless only in the half of the combustion chamber closest to the discharge end.

Preferably, the first lance assembly and the second lance assembly are each disposed in less than forty percent, preferably less than a third, and more preferably less than a quarter of the way along the combustion chamber from the discharging end to the charging end. This places the lances closer to the hot spot.

Each first and second lance assembly may comprise a single lance. However, preferably, at least one of the first and/or the second lance assemblies comprise a plurality of lances.

The lances may be configured such that they can only operate in a pure fuel gas or pure oxygen operating mode. However, preferably, at least one of the first and second lance assemblies is arranged to operate in a fuel gas rich and/or and oxygen-rich mode. This allows greater flexibility of operation.

At least one of the first and second lance assemblies may have separate ducts for the injection of fuel gas and oxygen. In this case, the supply of two gases can be maintained entirely separately. Alternatively, at least one of the first and second lance assemblies has a common duct for the injection of fuel gas and oxygen. Such an arrangement requires the gases to be fed separately to the common duct.

According to a second aspect of the present invention, there is provided a method as defined in claim 9.

The time interval is preferably from 10 to 30 minutes. Preferably, also, no pure oxygen or pure fuel is injected into the third of the combustion chamber closest to the charging end in order to avoid adversely affecting the hot spot.

For a more complete understanding of embodiments of the present invention, reference may be had to the following drawing figures taken in conjunction with the description of the embodiments, of which:
FIG. 1 is a schematic showing a system embodiment of the invention; and
FIG. 2 is another schematic showing the system embodiment of the present invention.

Furnace and system embodiments of the present invention increase the throughput (pull) of glass and reduce the amount of NOx formed in glass furnaces, such as for example end-port regenerative furnaces.

The furnace and system embodiments provide an efficient means of partially firing/injecting a furnace with fuel gas on firing side with oxygen on the exhaust side to increase heat transfer to hot spot to enable increase in throughput (pull) of glass and reducing NOx levels.

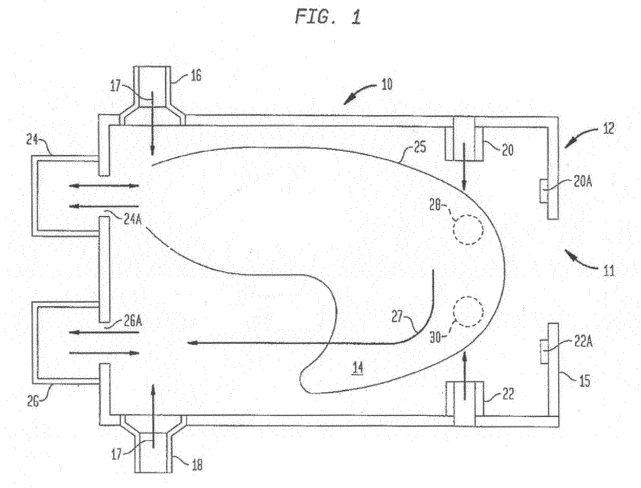

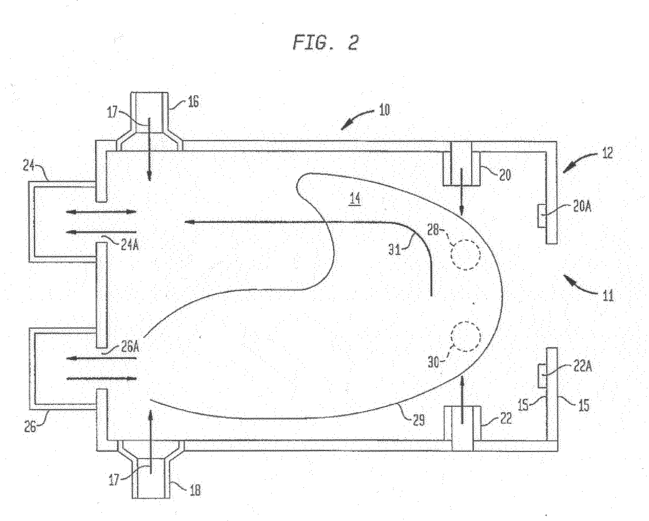

Referring to FIGS. 1 and 2, a furnace of the present invention is shown generally at 10 having a system embodiment of the present invention employed therewith. The furnace 10 includes an exterior wall 12 constructed and arranged to provide an interior combustion chamber 14.

Chargers 16, 18 are connected to the furnace 10 for communication with the combustion chamber 14 so as to provide a feed of the raw glass forming materials or other charging material (not shown) to the furnace 10, and in particular the combustion chamber 14.

It is well known to those skilled in the art that oxy-fuel burners can be positioned in a furnace at positions similar to those shown at locations 20 and 22 to increase pull rate. The implication of firing oxy-fuel burners in this zone is the generation of foam due to the localized high partial pressure/concentration of oxygen. During the furnace reversals it is common for the oxy-fuel burners to continue operating with injection of oxygen and fuel.

A downstream end of the furnace 10 includes a discharge port 11 or end of the furnace where the melted glass is withdrawn, often referred to as a throat. A pair of lances 20, 22 are disposed for operation at the downstream end of the furnace 10 (i.e., within the downstream end of the combustion chamber) The lance 20 may be used for injecting 100% fuel gas on one reversal (firing side) and used for injecting oxygen on other reversal (exhaust side). The lance 22 is also mounted at the downstream end of the furnace 10, for example at an opposed side of the furnace wall 12 as shown in the FIGS., so that the discharge from the lance 22 is in registration with lance 20. The lance 22 may be used for injecting 100% fuel gas on one reversal (firing side) and used for injecting oxygen on other reversal (exhaust side). Both of the lances 20, 22 are constructed and arranged for cyclical operation. That is, the lances 20, 22 can operate alternatively as fuel rich burners or oxidizing burners.

At an end of the furnace 10 opposed to the discharge port 11 there is disposed a pair of regenerators shown generally at 24, 26. Each of the regenerators 24, 26 is connected to a corresponding port, each of which is in communication with the combustion chamber 14. That is, the regenerator 24 is connected to port 24A. The regenerator 26 is connected to port 26A. The regenerators 24, 26 have fuel injectors (not shown) at the ports 24A, 26A which operate on oil or gas fuel, as the melting application requires. Arrows at the ports 24A, 26A indicate flow with respect to their associated regenerators and ports, and the operation of the furnace 10.

While in operation (i.e. not including the short length of time each regenerator 24, 26 is switching from exhausting to firing, and vice versa) one of the regenerators 24, 26 is firing (at a firing port), while the other of the regenerators 24, 26 is exhausting (at an exhaust port). Each of the ports 24A, 26A is equipped with fuel injectors (not shown) which operate only when the corresponding one of the ports is in firing mode. When in firing mode, combustion air flows through the regenerator and is preheated so that a high combustion temperature can be achieved for efficient operation of the furnace 10. The preheated air flows through the firing port and into the combustion chamber 14 where it reacts with the fuel from the firing port fuel injectors creating a flame. The flame heats the furnace structure and glass (not shown) to be melted. The exhaust port passes the hot furnace exhaust gases into a second regenerator which is heated up by the passage of these gases. After a period of 10-30 minutes (more typically 15-25 minutes) the flows of gases through the ports are reversed, so that combustion air now flows through the preheated regenerator (ie, the one that was previously exhausting) and the hot furnace exhaust now flows out through the heat depleted regenerator (i.e., the one that was previously firing) so as to recover waste energy.

More particularly and referring to FIG. 1, in operation, with the combustion chamber 14 of the furnace 10 provided with a feed of raw glass forming material represented by arrow 17 from the chargers 16, 18, the regenerator 24 at its burner at the port 24A provides the flame into the combustion chamber 14 for melting the feed. When the burner at the port 24A is actuated, the lance 20 is operated in a fuel gas mode during the period of time that the firing port 24A is in operation. A combustion footprint 25 or primary flame is shown generally for regenerator 24. Concurrent therewith, the lance 22 is operating in an oxygen mode so as to combust as completely as possible any fuel remaining from any incomplete combustion of the fuel gas 20 and the burner at port 24A. Thereafter, a combustion products flow 27 is removed through the port 26A of the regenerator 26.

This process will operate for approximately 15-25 minutes before the process is reversed as discussed below with respect to FIG. 2.

Referring to FIG. 2, at such time as a select amount of time has elapsed for the operation described above in FIG. 1, such as for example 20 minutes, regenerator 26 is now set to operate in firing mode and regenerator 24 is now set to operate in a exhaust mode. The burner of the regenerator at the port 26A will begin to fire to form a flame in the combustion chamber 14 and the burner of the regenerator at the port 24A will be turned off. Concurrent therewith, the lance 22 will operate in a fuel gas mode (non-oxidizing), while the lance 20 will shift to an oxidizing mode so that there is sufficient oxygen to combust any remaining combustion products in the combustion chamber 14. A combustion footprint 29 or primary flame is shown generally for regenerator 26. With the regenerator 24 in exhaust mode, a combustion products flow represented by arrow 31 from the combustion chamber 14 is generated. The flow 31 is removed through the port 24A of the regenerator 24. After a select amount of time, the process is reversed to that as discussed with respect to FIG. 1.

The lances 20, 22 may be mounted in the breast walls, that is, along sides of the furnace 10 parallel to the initial flame direction from the regenerators 24, 26, and/or in a crown of the furnace. Alternatively, the lances 20, 22 can be mounted in an end wall 12 as shown at 20A,22A, i.e., opposed to the ports 24A, 26A and proximate the discharge port 11. They may not, however, be mounted anywhere other than the half (measured along the length of the furnace) of the furnace closest to the wall 12.

Lances 28, 30 show an approximate position for such lances in the crown of the furnace 10. One or a plurality of the lances 28, 30 arranged in pairs along the furnace crown may be used.

It is possible to have a combination of breast wall 20, 22 and roof mounted lances 28,30 in a given furnace. This has the advantage of providing better mixing and consequently efficient reaction between the fuel and oxygen streams. For example, in Fig 2. when port 26 is in firing mode the oxygen streams from lances 20 and lances 28, and fuel gas streams from lances 22 and lances 30 will interact more effectively with the streams of combustion products 31 within the furnace 14. This is because both the oxidizing lances 20, 28 and the fuel gas lances 22, 30 are introduced substantially perpendicular to each other and also to the burners in port 26A and the main stream of combustion products 31 in the furnace 14.

In this invention any lances on the firing side of the melter would be operated fuel gas, and lances on the exhaust side will be operated oxygen.

In summary, a firing side of the furnace 10 will have the lances firing in a fuel gas manner, i.e. with insufficient oxygen for complete combustion. At an opposed side of the furnace 10 that is being used to exhaust the combustion products, i.e. the exhaust side of the furnace, lances at the opposed side will be oxygen so as to combust as completely as possible any fuel remaining from the incomplete combustion from the firing side of the furnace. The cycling between the regenerators 24, 26 and the lances 20, 22 can be done at intervals of 15-25 minutes, for example.

At least one of the lances 20,22 will be in operation on each of the firing and exhaust sides of the furnace 10. Such lances 20,22 should be sufficiently spaced from the exhaust ports 24A,26A so that there is sufficient time and space available for reaction to take place between the excess fuel from the firing side of the furnace 10 and the excess oxygen from the oxygen lance on the exhaust side of the furnace 10. Furthermore, the fuel gas lance may be disposed on the firing side of the furnace 10 located to create a fuel rich mixture in the applicable one of the combustion footprints 25,29 at the peak temperature regions in the furnace 10, i.e. at a furnace hot spot.

The fuel gas and oxygen lances 20,22 are disposed in the half of the furnace closest to the wall 12. At this position furnace crown temperatures are at or near their maximum in the furnace 10, which is commonly referred to as the furnace hot spot. At the hot spot there is typically an upwelling of low density heated glass from a bottom (not shown) of the furnace 10. On a surface of the glass bath (not shown) at the hot spot, the glass is further heated and the upwelled glass is forced partially towards the firing 24A and exhaust ports 26A, and partially toward the glass discharge port 11 or throat. Surface movement of the glass melt towards the firing port 24A and exhaust port 26A helps to restrict movement of any batch material towards the glass discharge port 11 before said batch material has been sufficiently melted. This upwelling of glass and resulting convection currents in the glass bath necessary for high performance operation of the furnace are promoted by maintenance of the hot spot. By using fuel gas and oxygen lances 20, 22 at or near the hot spot additional energy is imparted directly to the desired hot spot to thus maintain the location of the hot spot through the firing cycle of furnace operational changes. Furnace stability is improved by maintaining and controlling the hot spot. The hot spot is an effective location for the addition of oxy-fuel energy from fuel gas and oxygen lances because it additionally improves or reinforces the natural melting processes in the combustion chamber 14 of the furnace.

There is however a maximum amount of oxy-fuel energy that can be introduced to the hot spot before the crown superstructure temperatures are raised excessively. In addition, the flow paths of combustion products 27, 31 indicate that were a fuel rich region to be introduced on the firing side near the hot spot, ie, from the lance 20 on FIG. 1, the fuel gas region would be limited to a relatively short region as the fuel rich combustion products are swept across the combustion chamber 14 in flow paths 27,31.

With regard to NOx in such a system, NOx formation is inhibited in fuel rich regions due partially to the absence of oxygen and as such, if a size of the fuel rich region is increased then the final amount of NOx produced would be reduced. Therefore, to reduce NOx formation the size of the fuel rich region is increased which is achieved by the use of the fuel gas and oxygen lances 20,22 closer to the firing and exhaust ports 24A, 26A.

As a result of the need for fuel efficient operation, the combustion reactions are essentially complete prior to exit of the combustion products 27,31 into the respective exhaust port 24A,26A. Consequently, additional energy from the fuel gas and oxygen lances is not introduced proximate the exhaust port as space and time is needed for combustion to occur and be completed. Furthermore, the fuel rich combustion products following the paths 27,31, need to mix, interact and react as completely as possible with the oxygen rich streams at the respective exhaust side of the furnace so that the excess fuel in the fuel rich combustion products is consumed as much as possible within the furnace.

The furnace and system of the present invention will reduce the NOx emissions from, for example, end-port furnaces by the use of fuel gas and oxygen lances 20,22 in a staged manner. The system obviates the need for costly secondary NOx abatement equipment to be mounted to the furnace 10.

Use of oxygen in furnaces furthermore enables increased production rates for the furnace 10 and allows the furnace to continue to operate where the primary air-fuel combustion is deteriorating. Use of the system embodiments reduces the impact of NOx emissions, allows greater utilization of furnace equipment and profit to the customer, while avoiding capital expenditure associated with furnace modification or repair.

Switching the lances 20, 22 from fuel gas to oxygen avoids the need for turning the lances 20, 22 on and off and thus, reduces thermal cycling of components which can lead to failure and the need for secondary cooling media for the lances 20, 22.

It is well known to those skilled in the art that oxy-fuel burners can be positioned in a furnace at positions similar to those shown at locations 20 and 22 to increase pull rate. The implication of firing oxy-fuel burners in this zone is the generation of foam due to the localized high partial pressure/concentration of oxygen. The impact of increasing the foam layer is to insulate the bulk of the glass and reduce the heat transfer. During the furnace reversals it is common for the oxy-fuel burners to continue operating with injection of oxygen and fuel. The injection of 100% fuel gas in this zone reduces the localized concentration and partial pressure of oxygen and creates a localized fuel rich zone at the hot spot location. This small localized zone of fuel has the impact to suppress the foam layer thus reducing the insulating effect and increasing the heat transfer. The bulk of the gas injected dissociates into Carbon and OH radicals which burns adjacent to the bridge wall 15. This fuel gas provides additional heat to the bridge wall 15 and is an additional means of controlling this temperature. This temperature is impacted by the level of foam thickness and clearly the thinner the layer of foam the more heat that will be radiated from the wall 15 into the glass.

It is well known to those skilled in the art that oxy-fuel burners can be positioned in a furnace at positions similar to those shown at locations 20 and 22 to increase pull rate. These burners typically fire continuously during a furnace reversal when there is no fuel from the port burners. The net effect of having an oxy-fuel burner in an air environment is that the NOx increases during the reversal. In the present case, during reversal both lances 20 and 22 can operate in fuel gas mode (i.e., fuel gas only) and as a result there is a significant reduction in NOx at this point.

The lances 20 and 22 have the potential to have a single conduit or alternatively to have two distinct conduits one for fuel gas and another for oxygen.

It will be known by one skilled in the art that the furnace efficiency is directly proportional to the excess oxygen. In the present case, the excess oxygen in the exhaust regenerator can be used to modulate the combustion air and/or the oxygen injected. The higher the volume of oxygen the lower the volume of combustion air. The lower the volume of combustion air the more the staging of the primary fuel burners.

The more staging of the burners, the lower the NOx and typically the higher the heat transfer. The addition of oxygen lowers the combustion air flow which increases the air preheat. Lower combustion air volume will delay mixing of the primary natural gas. The natural gas injected by the lancing 20 is secondary fuel staging with completion of combustion by the secondary oxygen stream 22. The system utilizes both fuel and oxygen staging.

In a recent case study an end-fired furnace of capacity greater than 200MTPD was operated with this arrangement. A record pull increase was achieved by injecting approximately 5% of the natural gas through the lance 20 and an equivalent volume of oxygen on the exhaust lance 22. This achieved a record maximum pull that was approximately 3% higher than previous maximum. This max pull was achieved with NOx comparable to that at 20% lower capacity.

## Claims

1. An end-port regenerative furnace, comprising:
a housing (10);
a combustion chamber (14) disposed within the housing;
a charging end associated with the combustion chamber;
a first port (24A) and a second port (26A) at the housing for communication with the combustion chamber at the charging end;
a discharging end (11) associated with the combustion chamber and spaced apart from the charging end;
a first regenerator (24) disposed at the charging end and in communication with the combustion chamber (14) through the first port (24A), the first regenerator adapted for cyclical operation between a firing mode wherein fuel is injected proximate preheated combustion air passing through the first port into the combustion chamber, and an exhaust mode wherein products of combustion are exhausted from the combustion chamber through the first port;
a first lance assembly (20, 28) disposed only in the half of the combustion chamber closest to the discharging end (11) and adapted for cyclical operation between a fuel gas mode in which it injects only fuel gas and an oxygen mode in which it injects only oxygen concurrent with the cyclical operation of the first regenerator;
a second regenerator (26) disposed at the charging end and in communication with the combustion chamber (14) through the second port (26A), the second regenerator adapted for cyclical operation between the firing mode wherein fuel is injected proximate preheated combustion air passing through the second port into the combustion chamber, and the exhaust mode wherein products of combustion are exhausted from the combustion chamber through the second port; and
a second lance assembly (22, 30) disposed only in the half of the combustion chamber closest to the discharging end and adapted for cyclical operation between a fuel gas mode in which it injects only fuel gas and an oxygen mode in which it injects only oxygen concurrent with the cyclical operation of the second regenerator;
wherein the first lance assembly (20, 28) is operable in a fuel gas mode concurrently with the firing mode of the first regenerator (24) to provide fuel rich combustion and a fuel rich combustion product flow within the combustion chamber, and the second lance assembly (22, 30) is operable in an oxygen mode concurrently with the exhaust mode of the second regenerator (26) to provide additional oxygen to react with the fuel rich combustion product flow and form an exhaust flow from the combustion chamber (14); the first lance assembly (20, 28) is subsequently operable in the oxygen mode and the first regenerator (24) is operable in the exhaust mode, and the second lance assembly (22, 30) is operable in the fuel gas mode and the second regenerator is operable in the firing mode to reverse the combustion flow and the exhaust flow within the combustion chamber to cycle between the first and second regenerators.

2. The regenerative furnace according to claim 1, wherein the first lance assembly (20, 28) and the second lance assembly (22, 30) are each disposed at an opposing sidewall of the housing (10).

3. The regenerative furnace according to claim 1, wherein the first lance assembly (20, 28) and the second lance assembly (22, 30) are each disposed in a crown of the housing (10).

4. The regenerative furnace according to claim 1, wherein the first lance assembly (20, 28) and the second lance assembly (22, 30) are each disposed less than forty percent, preferably less than a third and more preferably less than a quarter of the way along the combustion chamber from the discharging end to the charging end.

5. The regenerative furnace according to any preceding claim, wherein the first (20, 28) and/or second (22, 30) lance assemblies comprises a plurality of lances.

6. A regenerative furnace according to any one of the preceding claims, wherein at least one of the first (20, 28) and second (22, 30) lance assemblies is arranged to operate in a fuel gas rich and/or an oxygen rich mode.

7. A regenerative furnace according to any one of the preceding claims, wherein at least one of the first (20, 28) and second (22, 30) lance assemblies have separate ducts for the injection of fuel gas and oxygen.

8. A regeneration furnace according to any one of claims 1 to 6, wherein at least one of the first (20, 28) and second (22, 30) lance assemblies has a common duct for the injection of fuel gas and oxygen.

9. A method of operating an end-port regenerative furnace having a combustion chamber (14) and first (24) and second (26) regenerators at a charging end each of which is operable in a firing mode and an exhaust mode, the method comprising:
providing a first lance (20, 28) only in the half of the combustion chamber furthest from the charging end and operating it in a fuel gas mode in which it injects only fuel gas and an oxygen mode in which it injects only oxygen concurrent with the operable mode of the first regenerator;
providing a second lance (22, 30) only in the half of the combustion chamber furthest from the charging end and operating it in a fuel gas mode in which it injects only fuel gas and an oxygen mode in which it injects only oxygen concurrent with the operable mode of the second regenerator;
operating the first regenerator (24) in the firing mode and the first lance (20, 28) in the fuel gas mode;
operating the second regenerator (26) in the exhaust mode and the second lance (22, 30) in the oxygen mode;
alternating the operable modes of the first (24) and second (26) regenerators and the first (20, 28) and second (22, 30) lances, wherein the first regenerator is operable in the exhaust mode and the first lance is operable in the oxygen mode, and the second regenerator is operable in the firing mode and the second lance is operable in the fuel gas mode; and
cycling the operable modes of the first (20, 28) and second (22, 30) regenerators and the first and second lances for successive time intervals to provide cyclical flows between the first and second regenerators.

10. The method according to claim 9, wherein the time interval is from 10-30 minutes.

11. The method according to claim 9 or claim 10, wherein no pure oxygen or pure fuel gas is injected into the third of the combustion chamber (14) closest to the charging end.

12. The method according to any one of claims 9 to 11, wherein during a change between modes, pure fuel gas is injected by both lances (20, 22, 28, 30).

## Patentansprüche

1. Endport-Regenerativ-Ofen, umfassend:
eine Einhausung (10);
eine Brennkammer (14), die innerhalb der Einhausung angeordnet ist;
ein Eintragsende, das der Brennkammer zugeordnet ist;
einen ersten Port (24A) und einen zweiten Port (26A) in der Einhausung zur Verbindung mit der Brennkammer am Eintragsende;
ein Austragsende (11), das der Brennkammer zugeordnet ist und vom Eintragsende beabstandet ist;
einen ersten Regenerator (24), der am Eintragsende angeordnet ist und durch den ersten Port (24A) mit der Brennkammer (14) in Verbindung steht, wobei der erste Regenerator für einen Pendelbetrieb zwischen einem Brennmodus, in dem Brennstoff nahe vorgewärmter Verbrennungsluft, die durch den ersten Port in die Brennkammer strömt, eingeblasen wird, und einem Abzugsmodus, in dem Verbrennungsprodukte aus der Brennkammer durch den ersten Port abgezogen werden, geeignet ist;
eine erste Lanzenanordnung (20, 28), die nur in der Hälfte der Brennkammer angeordnet ist, die dem Austragsende (11) am nächsten ist, und für einen Pendelbetrieb zwischen einem Brenngasmodus, in dem sie nur Brenngas einbläst, und einem Sauerstoffmodus, in dem sie nur Sauerstoff einbläst, gleichlaufend mit dem Pendelbetrieb des ersten Regenerators geeignet ist;
einen zweiten Regenerator (26), der am Eintragsende angeordnet ist und durch den zweiten Port (26A) mit der Brennkammer (14) in Verbindung steht, wobei der zweite Regenerator für einen Pendelbetrieb zwischen dem Brennmodus, in dem Brennstoff nahe vorgewärmter Verbrennungsluft, die durch den zweiten Port in die Brennkammer strömt, eingeblasen wird, und dem Abzugsmodus, in dem Verbrennungsprodukte aus der Brennkammer durch den zweiten Port abgezogen werden, geeignet ist; und
eine zweite Lanzenanordnung (22, 30), die nur in der Hälfte der Brennkammer angeordnet ist, die dem Austragsende am nächsten ist, und für einen Pendelbetrieb zwischen einem Brenngasmodus, in dem sie nur Brenngas einbläst, und einem Sauerstoffmodus, in dem sie nur Sauerstoff einbläst, gleichlaufend mit dem Pendelbetrieb des zweiten Regenerators geeignet ist;
wobei die erste Lanzenanordnung (20, 28) in einem Brenngasmodus parallel zum Brennmodus des ersten Regenerators (24) betreibbar ist, um eine brennstoffreiche Verbrennung und einen brennstoffreichen Verbrennungsproduktstrom innerhalb der Brennkammer bereitzustellen, und die zweite Lanzenanordnung (22, 30) in einem Sauerstoffmodus parallel zum Abzugsmodus des zweiten Regenerators (26) betreibbar ist, um zusätzlichen Sauerstoff bereitzustellen, der mit dem brennstoffreichen Verbrennungsproduktstrom reagiert, und einen Abzugsstrom aus der Brennkammer (14) zu bilden; die erste Lanzenanordnung (20, 28) anschließend im Sauerstoffmodus betreibbar ist und der erste Regenerator (24) im Abzugsmodus betreibbar ist und die zweite Lanzenanordnung (22, 30) im Brenngasmodus betreibbar ist und der zweite Regenerator im Brennmodus betreibbar ist, sodass der Verbrennungsstrom und der Abzugsstrom innerhalb der Brennkammer umgekehrt werden, um zwischen dem ersten und dem zweiten Regenerator zu wechseln.

2. Regenerativ-Ofen nach Anspruch 1, wobei die erste Lanzenanordnung (20, 28) und die zweite Lanzenanordnung (22, 30) jeweils an einer gegenüberliegenden Seitenwand der Einhausung (10) angeordnet sind.

3. Regenerativ-Ofen nach Anspruch 1, wobei die erste Lanzenanordnung (20, 28) und die zweite Lanzenanordnung (22, 30) jeweils in einem Gewölbe der Einhausung (10) angeordnet sind.

4. Regenerativ-Ofen nach Anspruch 1, wobei die erste Lanzenanordnung (20, 28) und die zweite Lanzenanordnung (22, 30) jeweils an weniger als vierzig Prozent, vorzugsweise weniger als einem Drittel und mehr bevorzugt weniger als einem Viertel des Weges entlang der Brennkammer vom Austragsende zum Eintragsende angeordnet sind.

5. Regenerativ-Ofen nach einem der vorstehenden Ansprüche, wobei die erste Lanzenanordnung (20, 28) und/oder die zweite Lanzenanordnung (22, 30) eine Vielzahl von Lanzen umfasst.

6. Regenerativ-Ofen nach einem der vorstehenden Ansprüche, wobei mindestens eine von der ersten Lanzenanordnung (20, 28) und der zweiten Lanzenanordnung (22, 30) so eingerichtet ist, dass sie in einem brenngasreichen und/oder einem sauerstoffreichen Modus arbeitet.

7. Regenerativ-Ofen nach einem der vorstehenden Ansprüche, wobei mindestens eine von der ersten Lanzenanordnung (20, 28) und der zweiten Lanzenanordnung (22, 30) getrennte Kanäle für das Einblasen von Brenngas und Sauerstoff aufweist.

8. Regenerativ-Ofen nach einem der Ansprüche 1 bis 6, wobei mindestens eine von der ersten Lanzenanordnung (20, 28) und der zweiten Lanzenanordnung (22, 30) einen gemeinsamen Kanal für das Einblasen von Brenngas und Sauerstoff aufweist.

9. Verfahren zum Betreiben eines Endport-Regenerativ-Ofens, der eine Brennkammer (14) und an einem Eintragsende einen ersten Regenerator (24) und einen zweiten Regenerator (26) aufweist, von denen jeder in einem Brennmodus und einem Abzugsmodus betreibbar ist, wobei das Verfahren umfasst:
Bereitstellen einer ersten Lanze (20, 28) nur in der Hälfte der Brennkammer, die am weitesten vom Eintragsende entfernt ist, und Betreiben derselben in einem Brenngasmodus, in dem sie nur Brenngas einbläst, und in einem Sauerstoffmodus, in dem sie nur Sauerstoff einbläst, gleichlaufend mit dem Betriebsmodus des ersten Regenerators;
Bereitstellen einer zweiten Lanze (22, 30) nur in der Hälfte der Brennkammer, die am weitesten vom Eintragsende entfernt ist, und Betreiben derselben in einem Brenngasmodus, in dem sie nur Brenngas einbläst, und in einem Sauerstoffmodus, in dem sie nur Sauerstoff einbläst, gleichlaufend mit dem Betriebsmodus des zweiten Regenerators;
Betreiben des ersten Regenerators (24) im Brennmodus und der ersten Lanze (20, 28) im Brenngasmodus;
Betreiben des zweiten Regenerators (26) im Abzugsmodus und der zweiten Lanze (22, 30) im Sauerstoffmodus;
Abwechseln der Betriebsmodi des ersten Regenerators (24) und des zweiten Regenerators (26) und der ersten Lanze (20, 28) und zweiten Lanze (22, 30), wobei der erste Regenerator im Abzugsmodus betreibbar ist und die erste Lanze im Sauerstoffmodus betreibbar ist und der zweite Regenerator im Brennmodus betreibbar ist und die zweite Lanze im Brenngasmodus betreibbar ist; und
Wechseln der Betriebsmodi des ersten (20, 28) und des zweiten (22, 30) Regenerators und der ersten und der zweiten Lanze während aufeinanderfolgender Zeitintervalle, um zyklische Ströme zwischen dem ersten und dem zweiten Regenerator bereitzustellen.

10. Verfahren nach Anspruch 9, wobei das Zeitintervall 10 bis 30 Minuten beträgt.

11. Verfahren nach Anspruch 9 oder Anspruch 10, wobei weder reiner Sauerstoff noch reines Brenngas in das Drittel der Brennkammer (14) eingeblasen wird, das dem Eintragsende am nächsten ist.

12. Verfahren nach einem der Ansprüche 9 bis 11, wobei während eines Moduswechsels von beiden Lanzen (20, 22, 28, 30) reines Brenngas eingeblasen wird.

## Revendications

1. Four à régénération à orifice d'extrémité, comprenant :
un logement (10) ;
une chambre de combustion (14) disposée à l'intérieur du logement ;
une extrémité de chargement associée à la chambre de combustion ;
un premier orifice (24A) et un deuxième orifice (26A) au niveau du logement pour la communication avec la chambre de combustion au niveau de l'extrémité de chargement ;
une extrémité de déchargement (11) associée à la chambre de combustion et espacée de l'extrémité de chargement ;
un premier régénérateur (24) disposé au niveau de l'extrémité de charge et en communication avec la chambre de combustion (14) par le premier orifice (24A), le premier régénérateur étant adapté pour un fonctionnement cyclique entre un mode d'allumage, dans lequel le combustible est injecté à proximité de l'air de combustion préchauffé passant par le premier orifice dans la chambre de combustion, et un mode d'échappement, dans lequel les produits de combustion sont évacués de la chambre de combustion par le premier orifice ;
un premier ensemble de lance (20, 28) disposé uniquement dans la moitié de la chambre de combustion la plus proche de l'extrémité de déchargement (11) et adapté pour un fonctionnement cyclique entre un mode de gaz combustible, dans lequel il injecte uniquement du gaz combustible et un mode d'oxygène, dans lequel il injecte uniquement de l'oxygène en même temps que le fonctionnement cyclique du premier régénérateur ;
un deuxième régénérateur (26) disposé au niveau de l'extrémité de chargement et en communication avec la chambre de combustion (14) par le deuxième orifice (26A), le deuxième régénérateur étant adapté pour un fonctionnement cyclique entre le mode d'allumage, dans lequel le combustible est injecté à proximité de l'air de combustion préchauffé passant par le deuxième orifice dans la chambre de combustion, et le mode d'échappement, dans lequel les produits de combustion sont évacués de la chambre de combustion par le deuxième orifice ; et
un deuxième ensemble de lance (22, 30) disposé uniquement dans la moitié de la chambre de combustion la plus proche de l'extrémité de déchargement et adapté pour un fonctionnement cyclique entre un mode de gaz combustible, dans lequel il injecte uniquement du gaz combustible et un mode d'oxygène, dans lequel il injecte uniquement de l'oxygène en même temps que le fonctionnement cyclique du deuxième régénérateur ;
dans lequel le premier ensemble de lance (20, 28) est utilisable en mode de gaz combustible simultanément avec le mode d'allumage du premier régénérateur (24) pour permettre une combustion riche du combustible et un écoulement des produits de combustion riche du combustible dans la chambre de combustion, et le deuxième ensemble de lance (22, 30) est utilisable en mode d'oxygène simultanément avec le mode d'échappement du deuxième régénérateur (26) pour fournir de l'oxygène supplémentaire pour réagir avec l'écoulement des produits de combustion riche du combustible et former un flux d'échappement depuis la chambre de combustion (14) ; le premier ensemble de lance (20, 28) peut donc être utilisé en mode d'oxygène et le premier régénérateur (24) peut fonctionner en mode d'échappement, et le deuxième ensemble de lance (22, 30) peut fonctionner en mode de gaz combustible et le deuxième régénérateur est utilisable en mode d'allumage pour inverser le flux de combustion et le flux d'échappement dans la chambre de combustion pour alterner entre les premier et deuxième régénérateurs.

2. Four à régénération selon la revendication 1, dans lequel le premier ensemble de lance (20, 28) et le deuxième ensemble de lance (22, 30) sont chacun disposés sur une paroi opposée du logement (10).

3. Four à régénération selon la revendication 1, dans lequel le premier ensemble de lance (20, 28) et le deuxième ensemble de lance (22, 30) sont chacun disposés dans une couronne du logement (10).

4. Four à régénération selon la revendication 1, dans lequel le premier ensemble de lance (20, 28) et le deuxième ensemble de lance (22, 30) sont chacun disposés à moins de quarante pour cent, de préférence à moins d'un tiers et plus préférablement à moins d'un quart de distance le long de la chambre de combustion entre l'extrémité de déchargement et l'extrémité de chargement.

5. Four à régénération selon l'une quelconque des revendications précédentes, dans lequel les premier (20, 28) et/ou deuxième (22, 30) ensembles de lance comprennent une pluralité de lances.

6. Four à régénération selon l'une quelconque des revendications précédentes, dans lequel au moins l'un des premier (20, 28) et deuxième (22, 30) ensembles de lance est agencé pour fonctionner en mode riche de gaz combustible et/ou riche d'oxygène.

7. Four à régénération selon l'une quelconque des revendications précédentes, dans lequel au moins l'un des premier (20, 28) et deuxième (22, 30) ensembles de lance ont des conduits séparés pour l'injection du gaz combustible et de l'oxygène.

8. Four à régénération selon l'une quelconque des revendications 1 à 6, dans lequel au moins l'un des premier (20, 28) et deuxième (22, 30) ensembles de lance a un conduit commun pour l'injection de gaz combustible et d'oxygène.

9. Procédé d'utilisation d'un four à régénération à orifice d'extrémité ayant une chambre de combustion (14) et des premier (24) et deuxième (26) régénérateurs à une extrémité de chargement, chacun pouvant fonctionner en un mode d'allumage et en un mode d'échappement, le procédé comprenant :
la mise en place d'une première lance (20, 28) uniquement dans la moitié de la chambre de combustion la plus éloignée de l'extrémité de chargement et son utilisation dans un mode de gaz combustible, dans lequel elle injecte uniquement du gaz combustible et un mode d'oxygène, dans lequel elle injecte uniquement de l'oxygène en même temps que le mode utilisable du premier régénérateur ;
la mise en place d'une deuxième lance (22, 30) uniquement dans la moitié de la chambre de combustion la plus éloignée de l'extrémité de chargement et son utilisation dans un mode de gaz combustible, dans lequel elle injecte uniquement du gaz combustible et un mode d'oxygène, dans lequel elle injecte uniquement de l'oxygène en même temps que le mode utilisable du deuxième régénérateur ;
l'utilisation du premier régénérateur (24) en mode d'allumage et de la première lance (20, 28) en mode de gaz combustible ;
l'utilisation du deuxième régénérateur (26) en mode d'échappement et de la deuxième lance (22, 30) en mode d'oxygène ;
l'alternance entre les modes d'utilisation des premier (24) et deuxième (26) régénérateurs et des première (20, 28) et deuxième (22, 30) lances, où le premier régénérateur peut fonctionner en mode d'échappement et la première lance peut fonctionner en mode d'oxygène, et le deuxième régénérateur peut fonctionner en mode d'allumage et la deuxième lance peut fonctionner en mode de gaz combustible ; et
l'alternance des modes d'utilisation entre les premier (20, 28) et deuxième (22, 30) régénérateurs et entre les première et deuxième lances pendant des intervalles de temps successifs pour permettre des écoulements cycliques entre les premier et deuxième régénérateurs.

10. Procédé selon la revendication 9, dans lequel l'intervalle de temps est de 10 à 30 minutes.

11. Procédé selon la revendication 9 ou la revendication 10, dans lequel aucun oxygène pur ou gaz combustible pur n'est injecté dans le tiers de la chambre de combustion (14) le plus proche de l'extrémité de chargement.

12. Procédé selon l'une quelconque des revendications 9 à 11, dans lequel, lors d'un changement de mode, du gaz combustible pur est injecté par les deux lances (20, 22, 28, 30).
